Europäisches Patentamt

European Patent Office

Office européen des brevets

(19)

(11) Veröffentlichungsnummer: **0 175 922**
**B1**

(12) **EUROPÄISCHE PATENTSCHRIFT**

(45) Veröffentlichungstag der Patentschrift :
19.07.89

(21) Anmeldenummer : 85110490.1

(22) Anmeldetag : 21.08.85

(51) Int. Cl.⁴ : **B 22 D 23/04**, B 22 D 25/04,
H 01 M 2/22, H 01 M 2/28,
H 01 M 4/82

(54) Giessform zur Herstellung von Polbrücken für Bleiakkumulatoren.

(30) Priorität : 22.09.84 DE 3434901

(43) Veröffentlichungstag der Anmeldung :
02.04.86 Patentblatt 86/14

(45) Bekanntmachung des Hinweises auf die Patenterteilung : 19.07.89 Patentblatt 89/29

(84) Benannte Vertragsstaaten :
AT DE FR GB IT SE

(56) Entgegenhaltungen :
DE–B– 2 011 578
DE–C– 1 067 899
US–A– 2 004 340
US–A– 4 173 326
US–A– 4 327 890

(73) Patentinhaber : VARTA Batterie Aktiengesellschaft
Am Leineufer 51
D-3000 Hannover 21 (DE)

(72) Erfinder : Bechtold, Dieter, Dipl.-Ing.
Am Wetterhahn 2
D-6000 Frankfurt 56 (DE)

(74) Vertreter : Kaiser, Dieter Ralf, Dipl.-Ing.
Gundelhardtstrasse 72
D-6233 Kelkheim/Ts. (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 175 922 B1

## Beschreibung

Die Erfindung betrifft eine Gießform zur Herstellung von Polbrücken für Bleiakkumulatoren, bei der eine mit der Polbrücke und dem Endpol korrespondierende Form in dem flüssigen Blei eines Schmelzkessels untergetaucht wird, eine die Form ausfüllende Menge Blei abgeschöpft wird und der Forminhalt von unten her mit den über Kopf hängenden Plattenfahnen zusammengebracht wird, wobei die Plattenfahnen durch die Hitze des flüssigen Bleis mit dem Forminhalt, bevor dieser erstarrt, verschmelzen.

Seit langem ist es bekannt, z. B. aus der DE-PS 1 067 899, die Plattenfahnen eines Plattensatzes aus gleichpoligen Elektroden mit der zugehörigen Polbrücke zu verbinden, indem man Blei in einer Gießform mit den Konturen der Polbrücke einschließlich Zellenpol erschmilzt und die Fahnen in die Schmelze eintaucht. Man spricht in diesem Zusammenhang von dem cast on straps-(COS-) Verfahren, welches eine homogene Schmelzverbindung der Fahnen mit der Polbrücke gestattet, wobei die Polbrücke und der Pol nach dem Erkalten als einstückiger Gießling entformt werden. Dabei ist für die Eingliederung dieser Arbeitsschritte in einen zügigen Produktionsfluß eine rationelle Temperaturführung äußerst wichtig. Gemäß US-PS 2 004 340 wird daher eine mit der Polbrücke und dem Pol korrespondierende, als Schöpfkelle ausgebildete Gießform zuerst durch oberflächliches Eintauchen in den Schmelzkessel vorgewärmt, dann durch Abschöpfen der entsprechenden Bleimenge aus dem Kesselinhalt gefüllt und nach dem Heranbringen an die über Kopf hängenden Plattenfahnen von unten her durch eine intensive Wasserkühlung abgeschreckt. Die Schöpfkelle läßt sich zu diesem Zweck in einen ihren Rand dicht umschließenden von Wasser durchströmten Abschreckbehälter einsetzen.

Da sich der Querschnitt der Polbrücke von der Mitte ausgehend, nach beiden Seiten ihrer Längserstreckung verjüngt, bringt diese ungleiche Materialanhäufung über ihre Länge einen unterschiedliche raschen Wärmeaustausch mit der Umgebung mit sich, derart, daß die dünneren Enden eher als die Mitte die günstige Temperatur für den Fahnenanguß erreichen, während in der Abkühlphase die von der Polbrücken-Mitte entsprechend der größeren Materialanhäufung aufgenommene Wärmemenge sich beim Abfließen staut.

Anliegen der Erfindung ist es daher, beim Herstellen der Polbrücke und des Pols nach dem COS-Verfahren Temperatur-Inhomogenitäten innerhalb des Schmelzmaterials während des Anschmelzens und Abkühlens möglichst zu vermeiden, um so an jeder Stelle der Polbrücke gleiche Angießbedingungen für die Fahnen zu schaffen.

Diese Aufgabe wird erfindungsgemäß mit Hilfe der im kennzeichnenden Teil des Anspruchs 1 angegebenen Maßnahme gelöst.

Die erfindungsgemäße technische Lösung geht davon aus, daß das Material der Gießform (vorzugsweise Titan) in allen Phasen der Temperaturbehandlung nach Maßgabe seines spezifischen Wärmeleitvermögens und der Wanddicke der Form am Wärmeumsatz beim Anschmelzvorgang beteiligt ist. Es wurde gefunden, daß ein der sich von Ort zu Ort ändernden Dickenkontur des Gießlings Rechnung tragender Wärmedurchgang erzielt werden kann, wenn man die Wanddicke der Gießform stets gegensinnig bzw. umgekehrt proportional zu der örtlichen Materialanhäufung gestaltet; das bedeutet: Bereiche des Gießlings mit viel Blei sind von wenig Formenmaterial umgeben und umgekehrt. Auf diese Weise wird z. B. der Wärmeabfluß aus den dünneren Polbrücken-Enden durch die in den entsprechend verdickten Formwänden gespeicherte Wärme verzögert und deren Abkühlungsgeschwindigkeit in zeitlichen Einklang mit derjenigen der Polbrückenmitte gebracht.

Anhand der Figuren soll die Erfindung und vorteilhafte Weiterbildungen verdeutlicht werden.

Figur 1 zeigt erfindungsgemäße Gießformen in einer Doppelanordnung.

Figur 2 zeigt isolierende Befestigungen der Gießform.

Figur 3 zeigt Einzelheiten der für die Aufnahme einer Poleinlage eingerichteten Gießform.

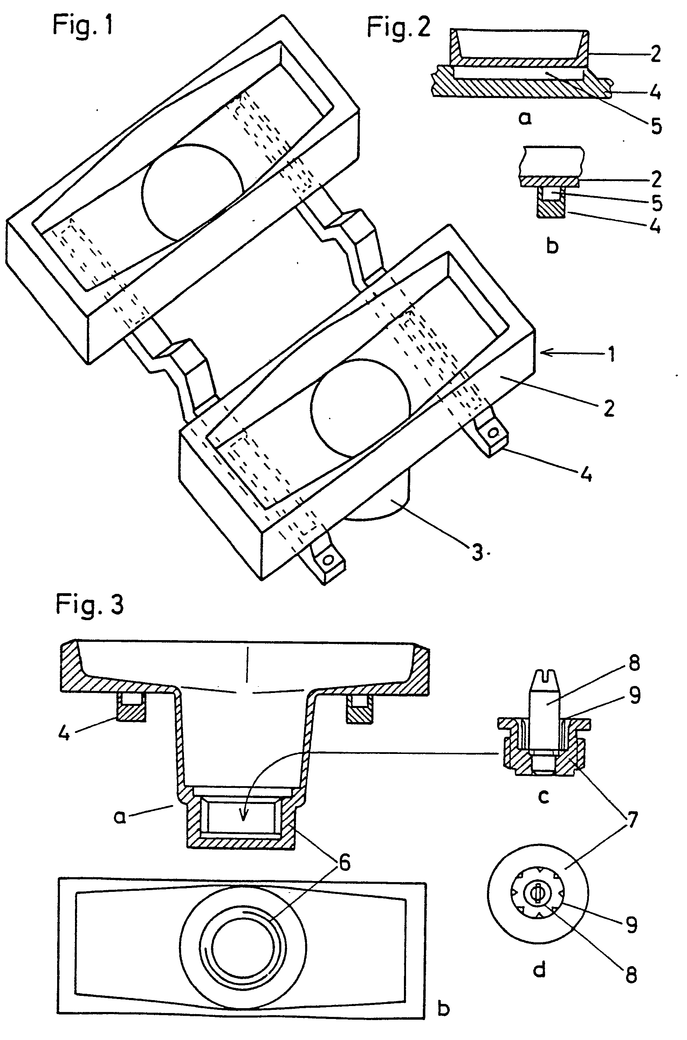

Nach Figur 1 sind zwei im Sinne der weiter oben gegebenen Erläuterung gestaltete Gießformen (1), deren Teil 2 mit der Polbrücke und deren Teil 3 mit dem Pol korrespondiert, gemeinsam an zwei Halterungen 4 in einem solchen Abstand befestigt, daß die Anschmelzung der Plattenfahnen beider Polaritäten einer Akkumulatorenzelle in einem einzigen Arbeitsgang vorgenommen werden kann.

Für die erfindungsgemäß angestrebte Vermeidung von Temperaturinhomogenitäten innerhalb des Gießlings aufgrund der ortsspezifischen Anhäufung von Blei stellen nun die Befestigungsvorrichtungen der Formen ihrerseits, da sie zusätzlich als Wärmeleitbrücken wirken, empfindliche Störungsquellen dar.

In einer besonders günstigen Ausführungsform gemäß der Erfindung wird die Gießform daher von hohl ausgebildeten Befestigungen oder Trägern gehalten. Dabei ist die Gießform mit diesen Halterungen gemäß den Beispielen a und b der Figur 2 lediglich über einen dünnen Materialsteg von ca. 1 mm Dicke in der Weise verschweißt, daß zwischen Form und Formhalter ein abgeschlossener Hohlraum 5 entsteht, der eine gewisse Wärmeisolation bildet.

In einer weiteren Ausführungsform der Erfindung wird das gleichzeitige Eingiessen einer Poleinlage aus einem elektrisch besser leitenden Metall als Blei dadurch in besonders vorteilhafter Weise berücksichtigt, daß der mit dem Pol korrespondierende Teil der Gießform nach der Schnittdarstellung in Figur 3a und Draufsicht in Figur 3b eine napfartige Verlängerung 6 besitzt, in welche das ebenfalls napfartige Werkzeug 7 aus gehärtetem Sthal (Figur 3c) durch Verschraubung einsetzbar ist. In den Boden dieses Werkzeugs ist weiterhin ein Führungsstift 8, ebenfalls aus gehärtetem Stahl, zentrisch eingeschraubt. Das Werkzeug 7 ist ferner, wie in Figur 3d durch eine Draufsicht verdeutlicht, mit einer funkenerosiv hergestellten Innenkontur 9 aus vertikal verlaufenden Kanten oder Graten versehen.

Mit dieser Maßnahme wird einem bisher häufig aufgetretenen Mangel abgeholfen, welcher darin bestand, daß die hülsenförmigen Poleinlagen aus Messing oder Kupfer (nicht dargestellt), welche von ihrer Innenseite her durch einen Dreikant oder ähnliches aufgenommen und zentriert wurden, beim Füllen der Gießform in dem spezifisch schwereren flüssigen Blei aufschwammen, weil das Hülsenmaterial sich bei Erwärmung stärker als das Material des Aufnahme-Dreikants (Stahl) ausdehnt und sich dadurch von diesem löste. Dieser Gefahr wirkt nun das erfindungsgemäße napfförmige Werkzeug dadurch entgegen, daß es gegenüber einer durch den Führungsstift 8 zentrierten und sich bei Erwärmung radial nach außen ausdehnenden Messinghülse als festes Widerlager fungiert, da sein Material sich weniger stark ausdehnt. Die Poleinlage (Hülse) preßt sich also in diesem Fall durch die eigene Ausdehnungsspannung fest an die Kanten der Innenkontur an und bleibt während des Gießvorganges in ihrer korrekten Position sicher fixiert. Das Kantenprofil der Innenkontur ist dabei so ausgelegt, daß kein flüssiges Blei in die nach oben offenen Zwischenspalte eindringen kann.

Bei der Abkühlung im Kühlwasserbehälter am Ende des Anschmelzvorganges taucht die Gießform zuerst mit dem Aufnahmeteil der Poleinlage in das Kühlwasser, worin dieses Teil auch am längsten verweilt. Als Folge schrumpfen nunmehr alle Teile dieses Bereiches — die Poleinlage stärker als das Aufnahmewerkzeug —, so daß nach dieser Schrumpfung die Entformung ohne großen Kraftaufwand gelingt.

**Patentansprüche**

1. Gießform (1) zur Herstellung von Polbrücken für Bleiakkumulatoren, bei der eine mit der Polbrücke und dem Endpol korrespondierende Form (2, 3) in dem flüssigen Blei eines Schmelzkessels untergetaucht wird, eine die Form ausfüllende Menge Blei abgeschöpft wird und der Forminhalt von unten her mit den über Kopf hängenden Plattenfahnen zusammengebracht wird, wobei die Plattenfahnen durch die Hitze des flüssigen Bleis mit dem Forminhalt, bevor dieser erstarrt, verschmelzen, dadurch gekennzeichnet, daß die Wanddicke des Teils (2) der Gießform gegensinnig zu der örtlichen Materialanhäufung der Polbrücke, deren Dicke und Breite über die Polbrückenlänge variieren, ausgebildet und in dem mit dem Endpol korrespondierenden Teil (3) eine Poleinlage aus einem elektrisch besser leitenden Metall als Blei aufnehmbar ist.

2. Gießform nach Anspruch 1, dadurch gekennzeichnet, daß sie unter Ausbildung eines umgebenden Hohlraums (5) in einer Formhalterung angeordnet und am Rand umlaufend mit dieser verschweißt ist.

3. Gießform nach einem der Ansprüche 1 oder 2, dadurch gekennzeichnet, daß das mit dem Endpol korrespondierende Teil (3) der Gießform napfartig verlängert ist und daß in die napfartige Verlängerung (6) ein ebenfalls napfartiges Aufnahmewerkzeug (7) für die Poleinlage mit einer durch senkrecht verlaufende Kanten konturierten Innenwand (9) einsetzbar ist.

4. Gießform nach Anspruch 3, dadurch gekennzeichnet, daß das Aufnahmewerkzeug mit einem Führungsstift (8) versehen ist.

**Claims**

1. Mould (1) for producing connector bars for lead accumulators, in which a mould (2, 3), corresponding to the connector bar and to the terminal, is immersed in the molten lead of a melting pot, an amount of lead sufficient to fill up the mould is skimmed off, and the content of the mould is brought together from below with the plate lugs hanging overhead, the plate lugs melting together with the content of the mould, before the latter solidifies, because of the heat of the molten lead, characterized in that the wall thickness of the part (2) of the mould is constructed inversely in relation to the local accumulation of material of the connector bar, the thickness and width of which vary over the length of the connector bar, and a terminal insert made from a metal which is a better conductor of electricity than lead may be received in the part (3) corresponding to the terminal.

2. Mould according to Claim 1, characterized in that it is arranged in a mould holder so as to form a surrounding cavity (5), and is welded to said holder circumferentially at the rim.

3. Mould according to one of the Claims 1 or 2, characterized in that the part (3) of the mould corresponding to the terminal is extended in a dish-shaped fashion, and in that it is possible to insert into the dish-shaped extension (6) an equally dish-shaped receiving tool (7) for the pole insert having an inner wall (9), the edges of which have a vertically extending contour.

4. Mould according to Claim 3, characterized in that the receiving tool is provided with a guide pin (8).

**Revendications**

1. Moule (1) pour la fabrication de pontets de connexion pour accumulateurs au plomb, au cours de laquelle un moule (2, 3) correspondant au pontet de connexion et au pôle d'extrémité est plongée dans le plomb en fusion d'un creuset, une quantité de plomb remplissant le moule est puisée et le contenu du moule est amené par un vas au contact des queues de plaque suspendues par la tête, à la suite de quoi, les queues de plaque fusionnent avec le contenu du moule en raison de la chaleur du plomb en fusion, avant sa solidification, caractérisé en ce que l'épaisseur de paroi de la partie (2) du moule est dimensionnée en sens inverse de l'accumulation locale de matière du pontet de connexion, dont l'épaisseur et la largeur varient sur la longueur du pontet de connexion, et une pièce d'insertion polaire en un métal meilleur conducteur électrique que le plomb peut être logée dans la partie (3) correspondant au pôle d'extrémité.

2. Moule suivant la revendication 1, caractérisé en ce qu'il est monté sur un support de moule en formant une cavité environnante (5) et soudé sur ce dernier sur le pourtour du bord.

3. Moule suivant l'une des revendications 1 ou 2, caractérisé en ce que la partie de moule (3) correspondant au pôle d'extrémité est prolongée en forme de cuvette et que dans le prolongement (6) en forme de cuvette, un outillage (7) de logement de la pièce d'insertion polaire, avec paroi intérieure (9) à profil en arêtes verticales puisse être mis en place.

4. Moule suivant la revendication 3, caractérisé en ce que l'outillage de mise en place est pourvu d'une cheville de guidage (8).

EP 0 175 922 B1

Fig. 1

Fig. 2

Fig. 3